# EUROPEAN PATENT SPECIFICATION

(11) **EP 3 735 110 B1**
(45) Date of publication and mention of the grant of the patent: **28.06.2023**
(21) Application number: 20181376.3
(22) Date of filing: 06.04.2018
(51) Int. Cl.: H05H 1/24, H01M 10/04, H05H 1/48

(54) **PLASMA GENERATING APPARATUS FOR SECONDARY BATTERY**
VORRICHTUNG ZUR PLASMAERZEUGUNG FÜR EINE SEKUNDÄRBATTERIE
APPAREIL DE PRODUCTION DE PLASMA POUR BATTERIE SECONDAIRE

(30) Priority: 24.05.2017 KR 20170064271
(43) Date of publication of application: 04.11.2020
(62) Divisional of application: 18805695.6
(73) Proprietor: LG Energy Solution, Ltd., Seoul 07335 (KR)
(72) Inventor: Kim, Duck Hoe, 34122 Daejeon (KR); Kim, Min Wook, 34122 Daejeon (KR); Cho, Ju Hyeon, 34122 Daejeon (KR); Ku, Cha Hun, 34122 Daejeon (KR); Lee, Sang Kyun, 34122 Daejeon (KR)
(74) Representative: Hoffmann Eitle

(56) References cited:
- JP-A- H1 036 535
- KR-A- 20160 028 730

## Description

### TECHNICAL FIELD

The present invention relates to a plasma generating apparatus for a secondary battery, and more particularly, to a plasma generating apparatus for a secondary battery, which realizes adhesion patterned on a surface of a separator.

### BACKGROUND ART

In general, secondary batteries refer to chargeable and dischargeable batteries, unlike primary batteries that are not chargeable. The secondary batteries are being widely used in the high-tech electronic fields such as mobile phones, notebook computers, and camcorders.

Also, such a secondary battery is classified into a can type secondary battery in which an electrode assembly is built in a metal can and a pouch type secondary battery in which an electrode assembly is built in a pouch. The pouch type secondary battery comprises an electrode assembly, an electrolyte, and a pouch accommodating the electrode assembly and the electrolyte. Also, in the electrode assembly, a positive electrode and a negative electrode are disposed with a separator therebetween. An electrode tab is attached to each of the positive electrode and the negative electrode, and an electrode lead is coupled to each of the electrode tabs.

A lamination process is performed on the secondary battery to improve adhesion of the electrode assembly in which the positive electrode, the separator, the negative electrode are laminated.

However, the secondary battery has a problem in which impregnation of the electrolyte is significantly reduced even though the positive electrode, the separator, and the negative electrode are improved in bonding property through the lamination process. Particularly, a gas generated between the positive electrode and the separator or between the negative electrode and the separator is not smoothly discharged, and thus, it is difficult to secure uniform quality of the electrode assembly.

JP H10 36535 A relates to corona discharge treatment of synthetic resin onto a tubular film and a corona discharge treatment unit. A tubular film made up of 1st and 2nd film layers with a gas encapsulated therebetween is advanced into a gap between the a discharge electrode and an earth roller electrode with the outer periphery consisting of a dielectric layer under application of the output from a high-frequency source to the discharge electrode while a pinch roller and the earth roller electrode are subjected to rotational driving in such a way that the 1st film layer is set apart from the discharge electrode while the 2nd film layer is brought into contact with the outer periphery of the earth roller electrode. The outer periphery of the dielectric layer is provided with recesses such as annular grooves so as to control the contact pressure of the 2nd film layer on the outer periphery of the earth roller electrode.

KR 2016 0028730 A relates to an apparatus for manufacturing a radical unit and a method for manufacturing an electrode assembly. The method for manufacturing an electrode assembly comprises: a first step of manufacturing a first kind of a basic unit body having a structure formed by alternately stacking the same number of electrodes and separation films; and a second step of manufacturing a unit body stack unit by repeatedly stacking the first kind of the basic unit bodies. An end portion of the separation film is not attached to an end portion of an adjacent separation film. The first kind of the basic unit body has a four-layered structure, formed by sequentially stacking a first electrode, a first separation film, a second electrode, and a second separation film, or a structure formed by stacking the four-layered structures. In the first step, the surface of at least one from the electrode and the separation film is treated with plasma.

### DISCLOSURE OF THE INVENTION

### TECHNICAL PROBLEM

The present invention has been made in order to solve the above-mentioned problems, and an object of the present invention is to provide a plasma generating apparatus for a secondary battery, which realizes adhesion patterned on a surface of a separator to improve the adhesion between an electrode and the separator, impregnation of an electrolyte, and discharge of a gas.

### TECHNICAL SOLUTION

To solve the above-described object, a plasma generating apparatus for a secondary battery according to the present invention is defined in claim 1 and comprises: a transfer roller configured to transfer a separator; a metal member built in the transfer roller; a plasma generating member configured to interact with the metal member to generate plasma and irradiate the generated plasma onto a surface of the separator; and protrusion members configured to realize an adhesion area from which a portion of the separator closely attached to the transfer roller protrudes and onto which the plasma is irradiated to provide adhesion and a non-adhesion area onto which the plasma is not irradiated or is weakly irradiated when compared with the adhesion area so that there is no adhesion or the resulting adhesion is weaker than that of the adhesion area.

Further, the separator has a bottom surface closely attached to the transfer roller, a top surface protruding by the protrusion member, and a connection surface connecting the bottom surface to the top surface, the plasma is irradiated onto the bottom surface and the top surface to provide the adhesion area having the adhesion, and the non-adhesion area having no adhesion or adhesion weaker than that of the adhesion area is provided on the connection surface while the irradiated plasma is concentrated onto the top surface.

The bottom surface and the top surface are provided as surfaces parallel to a longitudinal direction of the transfer roller, and the connection surface is provided as a vertical surface perpendicular to the bottom surface and the top surface.

The protrusion members have a ring shape along a circumferential surface of the transfer roller, and are provided in a longitudinal direction of the transfer roller.

The protrusion members having the ring shape are configured to move and be fixed to the transfer roller in the longitudinal direction of the transfer roller.

The plasma generating member may comprise: a main body disposed in a width direction of the separator; and an electrode piece disposed in a longitudinal direction of the main body to generate plasma between the metal member and the main body and thereby to irradiate the generated plasma onto the surface of the separator.

The protrusion members may be made of the same material as the transfer roller.

The plasma generating member may further comprise a switch configured to apply power to the electrode piece to generate the plasma.

The main body may be made of a non-metallic material. The main body may be made of ceramic.

The electrode piece may be provided as a corona discharge electrode.

The electrode piece may be inserted into an insertion groove provided in an outer surface of the main body.

### ADVANTAGEOUS EFFECTS

First: the plasma generating apparatus for the secondary battery according to the present invention comprises the transfer roller, the metal member, the plasma generating member, and the protrusion members.

Thus, the patterned adhesion may be realized on the surface of the separator, and the adhesion of the separator, the impregnation of the electrolyte, and the discharge of the gas may be improved.

Second: the protrusion members have the ring shape surrounding the circumferential surface of the transfer roller. Thus, a portion of the separator closely attached to the transfer roller may uniformly protrude, and thus, the adhesion having the certain pattern may be realized on the surface of the separator.

Third: the protrusion members are configured to move in the longitudinal direction of the transfer roller and be fixed. Thus, the patterned adhesion portion realized on the surface of the separator may be adjusted in position, and the patterned adhesion of the surface of the separator may be uniform.

Fourth: the protrusion members may be made of the same material as the transfer roller. Thus, the manufacturing process may be simplified, and the manufacturing costs may be reduced.

### BRIEF DESCRIPTION OF THE DRAWINGS

FIG. 1 is a cross-sectional view of a radical unit.
FIG. 2 is a cross-sectional view of an electrode assembly.
FIG. 3 is a view of a lamination system.
FIG. 4 is a side cross-sectional view of a plasma generating apparatus according to an embodiment of the present invention.
FIG. 5 is a plan view of the plasma generating apparatus according to an embodiment of the present invention.
FIG. 6 is a partial enlarged cross-sectional view of the plasma generating apparatus according to an embodiment of the present invention.

### MODE FOR CARRYING OUT THE INVENTION

Hereinafter, embodiments of the present invention will be described in detail with reference to the accompanying drawings. The present invention may, however, be embodied in different forms within the scope of the appended claims. In the drawings, anything unnecessary for describing the present invention will be omitted for clarity, and also like reference numerals in the drawings denote like elements.

### Structure of Radical Unit

In a radical unit, an electrode and a separator are alternately disposed. Here, the electrode and the separator may be arranged in the same number or in different numbers.

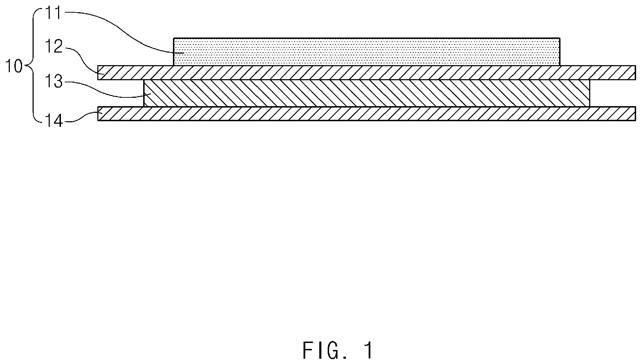

For example, as illustrated in FIG. 1, the radical unit 10 may be formed by successively laminating two electrodes 11 and 13 and two separators 12 and 14. Here, the two electrodes may be a positive electrode and a negative electrode, and the positive electrode and the negative electrode may face each other through the separator. Thus, the radical unit 10 has a structure in which the positive electrode, the separator, the negative electrode, and the separator are laminated.

### Structure of Electrode Assembly

The electrode assembly 100 may be formed by repeatedly laminating one kind of radical unit 10 or two kinds or more of radical units 10 in a predetermined order.

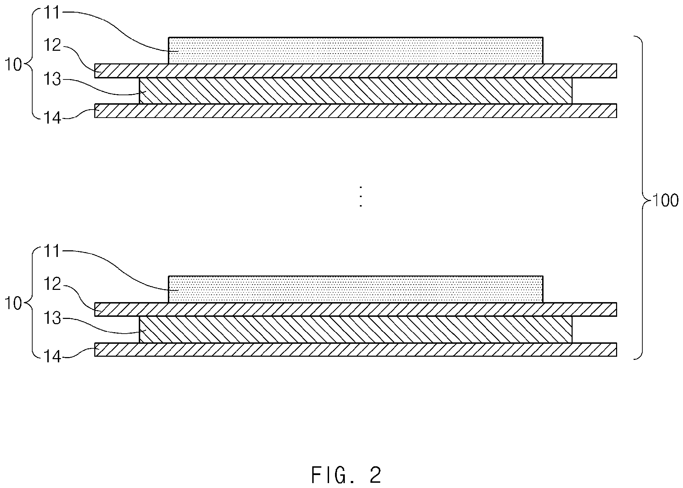

For example, as illustrated in FIG. 2, a plurality of radical units 10 having the same lamination structure are laminated in a vertical direction. That is, the electrode assembly 100 according to the first embodiment of the present invention may have a structure in which the radical unit 10 having a four-layered structure, in which the first electrode 11 that is the positive electrode, the separator 12, the second electrode 13 that is the negative electrode, and the separator 14 are successively laminated, is repeatedly laminated.

The radical unit 10 is manufactured through a lamination system. Here, the radical unit 10 may be improved in adhesion, electrolyte impregnation, and gas discharge through the lamination system 200.

### Lamination System

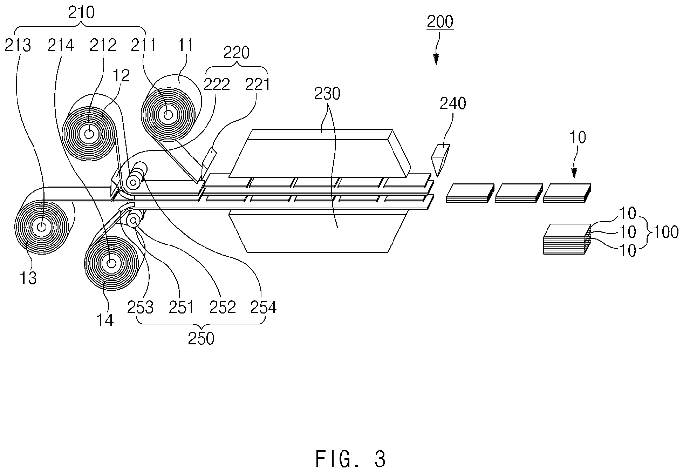

As illustrated in FIG. 3, a lamination system 200 may comprise a plurality of supply rollers 210 supplying the electrodes 11 and 13 and the separators 12 and 14 to be alternately laminated, a first cutter 220 cutting the electrodes 11 and 13, a laminator 230 thermally fusing the electrodes 11 and 13 and the separators 12 and 14 to manufacture a radical unit sheet, and a second cutter 240 cutting the radical unit sheet by a predetermined size to manufacture a radical unit 10.

The plurality of supply rollers 210 comprises a first electrode supply roller 211 supplying the first electrode that is the positive electrode, a second electrode supply roller 213 supplying the second electrode that is the negative electrode, a first separator supply roller 212 supplying one separator 12, and a second separator supply roller 214 supplying the other separator 14.

The first cutter 220 comprises a first cutter member 221 cutting one electrode 11 by a predetermined size and a second cutter member 222 cutting the other electrode 13 by a predetermined size.

The laminator 230 applies heat to allow the electrodes 11 and 13 to adhere to the separators 12 and 14 while pressing the electrodes 11 and 13 and the separators 12 and 14.

The second cutter 240 cuts the separators 12 and 14 between the electrodes 11 and 13 corresponding to each other to manufacture the radical unit 10.

The lamination system 200 comprising the above-described constituents may manufacture the radical unit 10 in which the electrodes 11 and 13 and the separators 12 and 14 are alternately laminated. The plurality of radical units 10 may be laminated to manufacture an electrode assembly 100.

The lamination system 200 may comprise a plasma generating apparatus 250 to improve adhesion of the radical unit 10, electrolyte impregnation, and gas discharge. That is, the plasma generating apparatus 250 activates adhesion that is uniform and patterned on the surface of the separator so that the electrode and the separator adhere to each other.

For example, as illustrated in FIGS. 3 to 5, the plasma generating apparatus 250 comprises a transfer roller 251, a metal member 252, a plasma generating member 253, and protrusion members 254.

The transfer roller 251 supports one surface of each of the separators 12 and 14 to transfer the separators 12 and 14. To stably irradiate plasma onto the surfaces of the separators 12 and 14 supported on the transfer roller 251, the separators 12 and 14 has to be supported on at least a quarter of the entire circumferential surface of the transfer roller 251.

The metal member 252 is provided in the transfer roller 251.

The plasma generating member 253 is disposed to be spaced apart from the separators 12 and 14 and interacts with the metal member 252 to generate plasma to be irradiated onto the surfaces of the separators 12 and 14.

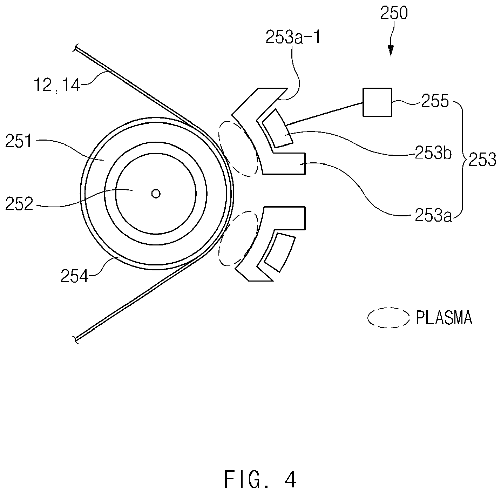

As illustrated in FIG. 4, the plasma generating member comprises a main body 253a disposed in a width direction of the separators 12 and 14 and an electrode piece 253b disposed in a longitudinal direction of the main body 253a to generate plasma between the metal member 252 and the main body 253a and thereby to irradiate the generated plasma onto the surfaces of the separators 12 and 14.

The main body 253a may be made of a non-metallic material. Thus, an occurrence of resistance between the metal member 252 and the electrode piece 253b may be prevented to stably generate the plasma between the metal member 252 and the main body 253a.

The main body 253a may be made of ceramic of the non-metallic material. The ceramic is a non-metallic inorganic material obtained through a thermal treatment process and has heat resistance, high strength, and corrosion resistance. Particularly, since the ceramic is lightweight, efficiency of use may be improved.

The electrode piece 253b may be a corona discharge electrode. The plasma may be stably generated between the metal member 252 and the main body 253a through the corona discharge electrode.

The electrode piece 253b may comprise a plurality of unit electrode pieces. The plurality of unit electrode pieces may be connected to each other in the width direction of the separators 12 and 14 on the main body 253a to form one electrode piece 253b. Thus, the unit electrode pieces may be compatibly used on the separators having various widths.

The plurality of unit electrode pieces may be disposed to be spaced apart from each other in the width direction of the separators 12 and 14 on the main body 253a. Thus, the plasma may be partially generated between the metal member 252 and the main body 253a, and thus, the patterned adhesion may be realized on the surfaces of the separators 12 and 14.

The plurality of electrode pieces may have the same length, width, and thickness or may have lengths, widths, and thicknesses of which at least one is different. Thus, the adhesion having various patterns may be realized on the surfaces of the separators 12 and 14.

An insertion groove 253a-1 lengthily defined in the main body 253a in the width direction of the separators 12 and 14. The of electrode piece 253b is inserted to be fixed to the insertion groove 253a-1. Thus, the electrode piece 253b may be prevented from being damaged by an external object, thereby stably generating the plasma.

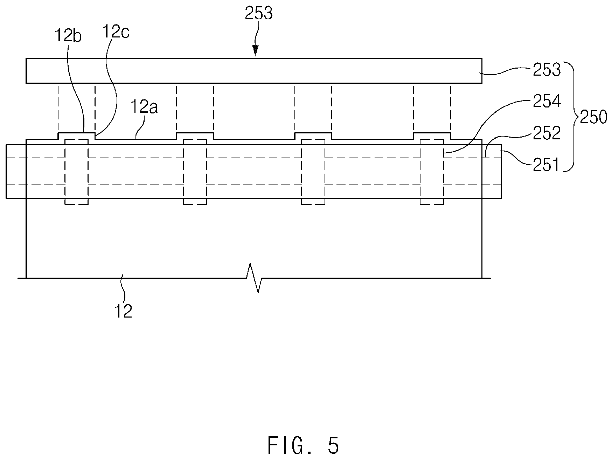

As illustrated in FIG. 5, in the plasma generating apparatus 253 having the above-described constituents, the metal member 252 and the electrode piece 253b may correspond to each other to generate the plasma. The plasma is irradiated onto the surface surfaces of the separators 12 and 14 between the metal member 252 and the electrode piece 253b to realize the adhesion on the separators 12 and 14.

The protrusion members 254 are configured to realize the patterned adhesion on the surfaces of the separators. The protrusion members 254 realize an adhesion area from which a portion of each of the separators 12 and 14 closely attached to the transfer roller 251 protrudes and which has adhesion onto which the plasma is irradiated and a non-adhesion area onto which the plasma is not irradiated or is weakly irradiated when compared with the adhesion area so that there is no adhesion or has adhesion weaker than that of the adhesion area. Thus, the patterned adhesion may be realized on the surfaces of the separators 12 and 14.

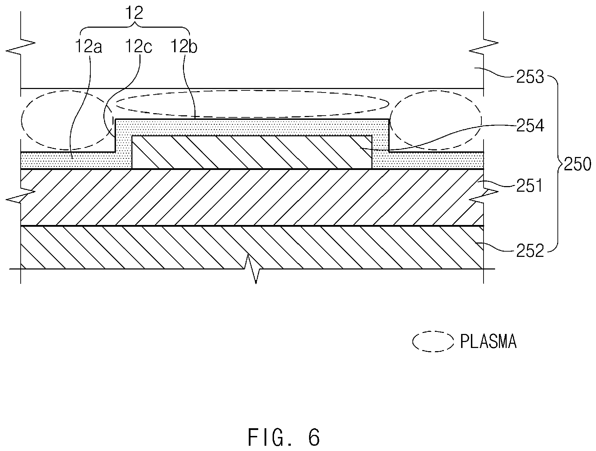

For example, as illustrated in FIGS. 5 and 6, the protrusion members 254 are disposed between the transfer roller 251 and the separator 12, and a portion of the separator 12 closely attached to the transfer roller 251 protrudes outward. Thus, the separator 12 has a bottom surface 12a closely attached to the transfer roller 251, a top surface 12b protruding by the protrusion members 254, and a connection surface 12c connecting the bottom surface 12a to the top surface 12b. That is, the separator 12 may provide a protrusion having an uneven shape by connecting the bottom surface 12a, the top surface 12b, and the connection surface 12c to each other.

When the plasma is irradiated onto the surface of the separator 12, the plasma is irradiated as it is to provide the adhesion area having the adhesion on the bottom surface 12a and the top surface 12b, and also, the plasma to be irradiated to the connection surface 12c is concentrated onto the top surface 12b to provide the non-adhesion area on the connection surface 12c.

Thus, the protrusion members 254 provide the adhesion area and the non-adhesion area on the surfaces of the separators 12 and 14 closely attached to the transfer roller 152. As a result, the adhesion area and the non-adhesion area are alternately provided to realize a mask having the patterned adhesion in the form of a pattern.

Here, the bottom surface 12a and the top surface 12b are provided as surfaces parallel to the longitudinal direction of the transfer roller 251. Thus, the plasma may be more stably irradiated onto the bottom surface 12a and the top surface 12b to realize the adhesion area. Also, the connection surface 12c is disposed as a vertical surface perpendicular to the bottom surface 12a and the top surface 12b. Thus, the plasma may not be irradiated onto the connection surface 12c, or even though the plasma is irradiated onto the connection surface 12c, the plasma may be minimally irradiated to realize the non-adhesion area that has no adhesion or has adhesion weaker than that of the adhesion area.

The protrusion members 254 have a ring shape along a circumferential surface of the transfer roller 251. That is, the protrusion members 254 may provide protrusions having the same shape on the surfaces of the separators 12 and 14 closely attached to the transfer roller 251, thereby realizing the patterned adhesion having a predetermined size and shape.

Protrusion members 254 are provided in the longitudinal direction of the transfer roller 251. Thus, the patterned adhesion having the plurality of non-adhesion areas may be realized on the surfaces of the separators 12 and 14. As a result, an electrolyte may be introduced, or a gas may be discharged through the plurality of non-adhesion areas to significantly improve the electrolyte impregnation and the gas discharge.

The protrusion members 254 having the ring shape are provided to move in the longitudinal direction of the transfer roller 251 and be fixed to the transfer roller 251. Thus, the non-adhesion areas realized on the surfaces of the separators 12 and 14 may be adjusted in position. As a result, the patterned adhesion provided on the surfaces of the separators 12 and 14 may be uniformly or differently adjusted.

The protrusion members 254 may be made of the same material as the transfer roller 251.

In the plasma generating apparatus for the secondary battery, which comprises the above-described constituents, according to an embodiment of the present invention, the adhesion area and the non-adhesion area may be provided on the surface of the separator to form the mask having the patterned adhesion.

Hereinafter, in descriptions of another embodiment of the present invention, constituents having the same constituent and function as the abovementioned embodiment have been given the same reference numeral in the drawings, and thus duplicated description will be omitted.

Referring to FIG. 4, a plasma generating apparatus for a secondary battery according to another embodiment of the present invention may further comprise a switch 255 that applies power to an electrode piece 253b of a plasma generating member 250. The switch 255 may control the power supplied to the electrode piece 253b to easily control the use of the electrode piece 253b, thereby preventing the power from being unnecessarily consumed.

Accordingly, the scope of the present invention is defined by the appended claims rather than the foregoing description and the exemplary embodiments described therein. Various modifications may be made within the scope of the appended claims.

## Claims

1. A plasma generating apparatus for a secondary battery, comprising:
a transfer roller (251) configured to transfer a separator (12, 14);
a metal member (252) built in the transfer roller (251);
a plasma generating member (253) configured to interact with the metal member (252) to generate plasma and irradiate the generated plasma onto a surface of the separator (12, 14); and
protrusion members (254) configured to realize an adhesion area from which a portion of the separator (12, 14) closely attached to the transfer roller (251) protrudes and onto which the plasma is irradiated to provide adhesion and a non-adhesion area onto which the plasma is not irradiated or is weakly irradiated when compared with the adhesion area so that there is no adhesion or the resulting adhesion is weaker than that of the adhesion area,
the separator (12) has a bottom surface (12a) closely attached to the transfer roller (251), a top surface (12b) protruding by the protrusion members (254), and a
connection surface (12c) connecting the bottom surface (12a) to the top surface (12b),
the plasma is irradiated onto the bottom surface (12a) and the top surface (12b) to provide the adhesion area having the adhesion, and
the non-adhesion area having no adhesion or adhesion weaker than that of the adhesion area is provided on the connection surface (12c) while the irradiated plasma is concentrated onto the top surface (12b),
the bottom surface (12a) and the top surface (12b) are provided as surfaces parallel to a longitudinal direction of the transfer roller (251), and
the connection surface (12c) is provided as a vertical surface perpendicular to the bottom surface (12a) and the top surface (12b),
wherein the protrusion members (254) have a ring shape along a circumferential surface of the transfer roller (251), and said protrusion members (254)
are provided in a longitudinal direction of the transfer roller (251), wherein
the protrusion members (254) having the ring shape are configured to move in the longitudinal direction of the transfer roller and be fixed so as to adjust in position the adhesion area.

2. The plasma generating apparatus of claim 1, wherein the protrusion members (254) are made of the same material as the transfer roller (251).

3. The plasma generating apparatus of claim 1, wherein the plasma generating member (253) comprises:
a main body (253a) disposed in a width direction of the separator (12, 14); and
an electrode piece (253b) disposed in a longitudinal direction of the main body (253a) to generate plasma between the metal member (252) and the main body (253a) and thereby to irradiate the generated plasma onto the surface of the separator (12, 14).

4. The plasma generating apparatus of claim 3, wherein the plasma generating member (253) further comprises a switch (255) configured to apply power to the electrode piece (253b) to generate the plasma.

5. The plasma generating apparatus of claim 3, wherein the main body (253a) is made of a non-metallic material.

6. The plasma generating apparatus of claim 5, wherein the main body (253a) is made of ceramic.

7. The plasma generating apparatus of claim 3, wherein the electrode piece (253b) is provided as a corona discharge electrode.

8. The plasma generating apparatus of claim 3, wherein the electrode piece (253b) is inserted into an insertion groove (253a-1) provided in an outer surface of the main body (253a).

## Patentansprüche

1. Plasmaerzeugungseinrichtung für eine Sekundärbatterie, umfassend:
eine Übertragwalze (251), die konfiguriert ist, einen Steg (12, 14) zu übertragen;
ein Metallelement (252), das in die Übertragungswalze (251) eingebaut ist;
ein Plasmaerzeugungselement (253), das konfiguriert ist, mit dem Metallelement (252) zu interagieren, um Plasma zu erzeugen und das erzeugte Plasma auf eine Oberfläche des Stegs (12, 14) zu strahlen; und
Fortsatzelemente (254), die konfiguriert sind, einen Haftbereich auszuführen, von dem ein Abschnitt des Stegs (12,14), der eng an der Übertragwalze (251) befestigt ist, vorragt und auf den das Plasma gestrahlt wird, um Haftung bereitzustellen, und einen Nichtklebebereich auszubilden, auf den das Plasma nicht gestrahlt wird oder schwach gestrahlt wird, wenn mit dem Klebebereich verglichen, sodass es dort keine Haftung gibt oder die resultierende Haftung schwächer als die des Haftbereichs ist,
wobei der Steg (12) eine Bodenoberfläche (12a), eng an der Übertragwalze (251) befestigt, eine Oberseitenoberfläche (12b), die von dem Fortsatzelement (254) vorragt, und eine Verbindungsoberfläche (12c), die die Bodenoberfläche (12a) mit der Oberseitenoberfläche (12b) verbindet, aufweist,
das Plasma auf die Bodenoberfläche (12a) und die Oberseitenoberfläche (12b) gestrahlt wird, um den Haftbereich bereitzustellen, der die Haftung aufweist, und
der Nichthaftbereich, der keine Haftung oder eine schwächere Haftung als der Haftbereich aufweist, an der Verbindungsoberfläche (12c) bereitgestellt ist, während das gestrahlte Plasma auf die Oberseitenoberfläche (12b) konzentriert ist,
die Bodenoberfläche (12a) und die Oberseitenoberfläche (12b) als Oberflächen bereitgestellt sind, die parallel zu einer Längsrichtung der Übertragwalze (251) verlaufen, und
die Verbindungsoberfläche (12c) als eine vertikale Oberfläche bereitgestellt ist, die senkrecht zur Bodenoberfläche (12a) und der Oberseitenoberfläche (12b) verläuft,
wobei die Fortsatzelemente (254) eine Ringform entlang einer Umfangsoberfläche der Übertragwalze (251) aufweisen und die Fortsatzelemente (254) in einer Längsrichtung der Übertragwalze (251) bereitgestellt sind, wobei
die Fortsatzelemente (254), welche die Ringform aufweisen, konfiguriert sind, sich in der Längsrichtung der Übertragwalze zu bewegen und derart fixiert zu sein, um die Position des Haftbereichs einstellen zu können.

2. Plasmaerzeugungseinrichtung nach Anspruch 1, wobei die Fortsatzelemente (254) aus demselben Material wie die Übertragwalze (251) hergestellt sind.

3. Plasmaerzeugungseinrichtung nach Anspruch 1, wobei das Plasmaerzeugungselement (253) Folgendes umfasst:
einen Hauptkörper (253a), der in einer Breitenrichtung des Stegs (12, 14) angeordnet ist; und
ein Elektrodenteil (253b), das in einer Längsrichtung des Hauptkörpers (253a) angeordnet ist, um Plasma zwischen dem Metallelement (252) und dem Hauptkörper (253a) zu erzeugen und dadurch das erzeugte Plasma auf die Oberfläche des Stegs (12, 14) zu strahlen.

4. Plasmaerzeugungseinrichtung nach Anspruch 3, wobei das Plasmaerzeugungselement (253) weiter einen Schalter (255) umfasst, der konfiguriert ist, Strom an das Elektrodenteil (253b) anzulegen, um das Plasma zu erzeugen.

5. Plasmaerzeugungseinrichtung nach Anspruch 3, wobei der Hauptkörper (253a) aus einem nichtmetallischen Material hergestellt ist.

6. Plasmaerzeugungseinrichtung nach Anspruch 5, wobei der Hauptkörper (253a) aus Keramik hergestellt ist.

7. Plasmaerzeugungseinrichtung nach Anspruch 3, wobei das Elektrodenteil (253b) als eine Glimmentladungselektrode bereitgestellt ist.

8. Plasmaerzeugungseinrichtung nach Anspruch 3, wobei das Elektrodenteil (253b) in eine Einsatzkerbe (253a-1) eingesetzt ist, die in einer Außenoberfläche des Hauptkörpers (253a) bereitgestellt ist.

## Revendications

1. Appareil de production de plasma pour une batterie secondaire, comprenant :
un rouleau de transfert (251) configuré pour transférer un séparateur (12, 14) ;
un élément métallique (252) intégré dans le rouleau de transfert (251) ;
un élément de production de plasma (253) configuré pour interagir avec l'élément métallique (252) pour produire du plasma et irradier le plasma produit sur une surface du séparateur (12, 14) ; et
des éléments en saillie (254) configurés pour réaliser une zone d'adhérence à partir de laquelle fait saillie une partie du séparateur (12, 14) étroitement fixée au rouleau de transfert (251) et sur laquelle le plasma est irradié pour fournir une adhérence et une zone de non-adhérence sur laquelle le plasma n'est pas irradié ou est faiblement irradié par rapport à la zone d'adhérence de sorte qu'il n'y a pas d'adhérence ou que l'adhérence résultante est plus faible que celle de la zone d'adhérence,
le séparateur (12) présente une surface inférieure (12a) étroitement fixée au rouleau de transfert (251), une surface supérieure (12b) faisant saillie par les éléments en saillie (254) et une surface de liaison (12c) reliant la surface inférieure (12a) à la surface supérieure (12b),
le plasma est irradié sur la surface inférieure (12a) et la surface supérieure (12b) pour fournir la zone d'adhérence présentant l'adhérence, et
la zone de non-adhérence ne présentant pas d'adhérence ou une adhérence plus faible que celle de la zone d'adhérence est prévue sur la surface de liaison (12c) alors que le plasma irradié est concentré sur la surface supérieure (12b),
la surface inférieure (12a) et la surface supérieure (12b) sont prévues sous forme de surfaces parallèles à un sens longitudinal du rouleau de transfert (251), et
la surface de liaison (12c) est prévue sous forme d'une surface verticale perpendiculaire à la surface inférieure (12a) et à la surface supérieure (12b),
dans lequel les éléments en saillie (254) présentent une forme annulaire le long d'une surface circonférentielle du rouleau de transfert (251), et lesdits éléments en saillie (254) sont prévus dans un sens longitudinal du rouleau de transfert (251), dans lequel
les éléments en saillie (254) présentant la forme annulaire sont configurés pour se déplacer dans la direction longitudinale du rouleau de transfert et être fixés de manière à ajuster en position la zone d'adhérence.

2. Appareil de production de plasma selon la revendication 1, dans lequel les éléments en saillie (254) sont composés du même matériau que le rouleau de transfert (251).

3. Appareil de production de plasma selon la revendication 1, dans lequel l'élément de production de plasma (253) comprend :
un corps principal (253a) disposé dans un sens de la largeur du séparateur (12, 14) ; et
une pièce électrode (253b) disposée dans un sens longitudinal du corps principal (253a) pour produire du plasma entre l'élément métallique (252) et le corps principal (253a) et irradier ainsi le plasma produit sur la surface du séparateur (12, 14).

4. Appareil de production de plasma selon la revendication 3, dans lequel l'élément de production de plasma (253) comprend en outre un interrupteur (255) configuré pour appliquer de l'énergie à la pièce électrode (253b) pour produire le plasma.

5. Appareil de production de plasma selon la revendication 3, dans lequel le corps principal (253a) est composé d'un matériau non métallique.

6. Appareil de production de plasma selon la revendication 5, dans lequel le corps principal (253a) est composé de céramique.

7. Appareil de production de plasma selon la revendication 3, dans lequel la pièce électrode (253b) est prévue sous forme d'une électrode à décharge par effet couronne.

8. Appareil de production de plasma selon la revendication 3, dans lequel la pièce électrode (253b) est insérée dans une rainure d'insertion (253a-1) prévue dans une surface externe du corps principal (253a).
